# EUROPEAN PATENT APPLICATION

(11) **EP 3 503 006 A1**
(43) Date of publication of application: **26.06.2019**
(21) Application number: 18214768.6
(22) Date of filing: 20.12.2018
(51) Int. Cl.: G06Q 30/02

(54) **SYSTEM AND PROCESS FOR AUDIENCE SEGMENT ATTRIBUTE IDENTIFICATION**

(30) Priority: 20.12.2017 US 201762608080 P
(71) Applicant: Lucid Holdings, LLC, New Orleans, Louisiana 70130 (US)
(72) Inventor: MCCONNELL, Ted, New Orleans, LA 70130 (US); ZAHTILA, Joseph, New Orleans, LA 70130 (US); WHITE-CINIS, Jessey, New Orleans, LA 70130 (US); SCHNITTLICH, Brett, New Orleans, LA 70130 (US)
(74) Representative: Schwegman Lundberg Woessner Limited

(57) **Abstract**

Disclosed in some examples are systems, methods, devices, and machine-readable mediums for providing information about the actual viewing audience of an online advertisement. When an online advertisement is displayed to a viewer, the online advertisement image may contain a tracking pixel pointing to a system which, when retrieved, causes a data object to be installed on the viewer's computer. Later, the viewer may return to the system as part of participation in an otherwise unrelated online survey. The system may recognize the data object, and insert questions related to the online advertisement in the survey.

## Description

### BACKGROUND

The Internet has become an essential source for people to get news and entertainment, and thus a valuable place for advertisers to reach those people. An advertisement needs to reach the right demographic of people for it to be effective. Trying to sell a product or service to a person that would never have a need for that product or service is a wasted effort. Thus, advertisers may desire to understand the demographics and interests of the people who visit the Internet locations where their advertisements may be placed. The demographics and interests may be simple categorizations, such as age, gender, and location, they may be ideological categorizations such as education level, political affiliations, or religious beliefs, and they may be specific groups such as nursing mothers or disc golf enthusiasts.

### BRIEF DESCRIPTION OF THE DRAWINGS

In the drawings, which are not necessarily drawn to scale, like numerals may describe similar components in different views. Like numerals having different letter suffixes may represent different instances of similar components. The drawings illustrate generally, by way of example, but not by way of limitation, various embodiments discussed in the present document.
FIG. 1 illustrates an example process for identifying or validating audience attributes, in accordance with some embodiments.
FIG. 2A and 2B illustrates the presently disclosed system in accordance with some embodiments.
FIG. 3A and 3B illustrates a timing diagram for the presently disclosed process to validate a subject and validate a segment, in accordance with some embodiments.
FIG. 4 illustrates a display with a content site, in accordance with some embodiments.
FIG. 5 illustrates a mobile device with a display of a content site, in accordance with some embodiments.
FIG. 6 illustrates a survey, in accordance with some embodiments.
FIG. 7 illustrates the presently disclosed system, in accordance with some embodiments.
FIG. 8 illustrates a survey question tree, in accordance with some embodiments.
FIG. 9 illustrates a flow chart showing a method for completing a verification, in accordance with some embodiments
FIG. 10 is a block diagram illustrating an example of a machine upon which one or more embodiments may be implemented.

### DETAILED DESCRIPTION

In the world of media and advertising it is advantageous to understand the attributes of the individuals to whom media or advertisements are sent. An attribute may be anything which describes an individual, such as general demographic information, interests and beliefs, or specific activities or lifestyles of the individual. The presently disclosed system provides a possible means for audience validation to verify members of an audience belong in a categorized group or segment it is believed they are part of. The presently disclosed system may further collect attribute information about those audience members to determine other attribute segments the audience members may belong in.

Many of the examples described herein are provided in the context of advertising on a web page or Internet content medium. However, the applicability of the inventive subject matter is not limited to advertising. The present inventive subject matter is generally applicable to a wide range of directed content delivery to an appropriate audience. For example, the present inventive subject matter is applicable to reaching a group of people with news content relative to their interests.

The Internet presents a huge opportunity for advertisers to reach consumers. Many Internet destinations, such as websites, create excellent opportunities for an advertiser to reach a consumer. In order to more effectively reach an audience that may be receptive to an advertiser's product or service, the advertiser would like to advertise to people that match certain target attributes. The anonymity of the Internet presents challenges to achieving this goal. One way of overcoming this is to utilize general assumptions about a target audience. For example, a sports program may be assumed to draw a different type of audience (e.g., middle aged men) versus a daytime talk show.

This method may not be completely accurate as all viewers may not fit the typical demographic. Another way of targeting advertisements is to utilize a market segment provided by a third party data provider. These data providers track users (e.g., using Internet cookies) across multiple Internet sites and are able to learn their browsing behaviors and preferences. The learned behaviors and preferences may be used to cluster users with similar behaviors together into segments. Advertisers may then select segments to advertise to and the advertisements are delivered to users in the segment when the users are recognized based upon their tracking cookies.

The audience or segment data held by the data broker is incredibly valuable for advertisers. An advertiser may rely on the data broker segment data to determine how and where to direct their advertisements. The data brokers need to ensure the quality of the user data provided to the advertiser. If the data is not reliable, the advertiser is in no better position than if they had guessed where their advertisement should be placed. With many different data brokers in the market, but with no means for verifying the demographic and characteristic information for people held within those data provided by the data brokers, there is no way for an advertiser to know which data broker is best, or even reliable.

Disclosed in some examples are systems, methods, devices, and machine-readable mediums for verifying attributes of a viewing audience of an online advertisement and/or attributes of a segment. In addition to verifying attributes of the viewing audience or segment, the system may discover additional attributes. This may be achieved by recognizing a user or segment member during a visit to a survey platform provided by the system and by dynamically inserting questions into the survey to determine the attributes of the audience member or segment member. Advertisers and data brokers may thus utilize the system to verify the segment data provided by the data broker and to determine the accuracy of such segments.

As a first step, a data object may be inserted onto the user's computer to track them. In some examples, this may already be done by a data broker to mark a user as a member of a segment. In other examples, when an online advertisement is displayed to a viewer, the online advertisement image may contain a tracking pixel pointing to the presently disclosed system which, when retrieved, causes a data object to be installed on the viewer's computer. Next, the user may return to the presently disclosed system as part of participation in an otherwise unrelated online survey provided by the presently disclosed system. The system may recognize the data object, and insert questions related to an attribute of the user in the survey. In other examples, the system may perform audience segment validation to confirm or supplement the attributes associated with a known audience segment as supplied by a data provider. A data provider may wish to validate or supplement attributes of an audience segment. By providing identifiers for the segment members to the presently disclosed system, when a segment member interacts with the system, the system recognizes a match and sync occurs. The presently disclosed system may dynamically construct a survey for the segment member based, in part, on the believed attributes of the segment member to validate the attribute beliefs for the provided audience segment.

The presently disclosed system may be used to test and verify the data being provided about the claimed audience an advertisement may reach. The system may be used in at least two ways. First, the system may verify (or not) assumptions on the segment attributes of an audience. This may be referred to as campaign validation. For example, a publisher may claim to have online digital advertising space that reaches women interested in vegan cooking. The system may be utilized to verify that the space does reach women interested in vegan cooking. The system may provide additional analytics and statistics about the audience segment attributes. For example, advertising space may claim to reach women interested in vegan cooking, but only 5% of the audience fits that attribute segment categorization. Thus, the system may verify more than just that an attribute segment group is reached, but also the percentage of the overall audience the group comprises, or the number of people in that group that are reached within a time period, such as a week or a month.

Attributes about an audience or a subject may be any information collected about a person or group of people which defines characteristics about them, especially for the interest of directing advertisements. Attribute information may be, but not limited to, demographics, intentions, interests, attitudes, beliefs, disease state, hobbies, desires, and psychographics. A group of people that share at least one attribute or similar attribute are a segment or attribute segment. For example, an attribute may be an interest in dogs. A segment that shares a similar attribute may be a group of people that have either an interest in dogs or cats, as the similar attribute may be people with an interest in pets. An audience may be the group of subjects that have viewed an online advertisement or that an online advertisement is intended for. An identified audience may be a list of identities of subjects from a segment or campaign.

The system may provide secondary information about a confirmed segment attribute. The system may verify the assumed attribute segment audience is being reached, but may also discover a large percentage of that assumed attribute segment audience has another secondary shared interest or attribute. For example, the system may verify a set of advertising spaces has a high percentage of viewers which are women interested in vegan cooking. The system may additionally report that among the women interested in vegan cooking, a high percentage of them own cats.

Second, the system may be used to verify the understanding of an attribute tied to a demographic or an audience segment. This may be referred to as segment validation, as discussed above. The presently disclosed system may be utilized to prevent assumptions about the attributes of a segment group and verify the attributes and secondary attributes of the segment. In an embodiment, it may be believed that a segment group identified by an attribute may be interested in certain types of products. The system may validate the belief of that product interest for the attribute segment group. For example, a segment group or audience may be identified with the attribute of being new parents. The assumption may be that new parents are interested in diapers. The system may be used to verify the interests of the segment and confirm that the segment of new parents are interested in diapers.

A data broker may hold attribute information about people. The data broker may identify a person based on a device identifier, such as an IP address or media access control (MAC) address, or through the use of Internet cookies. A tracking cookie may be accessed by a data broker to collect information the cookie has stored about the user such as the web pages the user has visited and other attributes about the user. The cookie may have a unique identifier and the data collected from the cookie may be stored using the unique identifier.

The audience or segment data held by the data broker is incredibly valuable for advertisers. An advertiser may rely on the data broker segment data to determine how and where to direct their advertisements. The data brokers want to ensure the quality of the user data provided to the advertiser.

In some examples, this system solves a technical problem unique to the world of online advertisement. That is, individuals may not provide their identities or attributes to all locations online that the individual visits which serve advertisements. The presently disclosed system solves this problem by utilizing a technical solution which involves matching an individual visiting a web-service by way of a third party portal, that is not associated with an advertisement, with an online identity, which may be associated with attributes, stored in a storage device of a web-service.

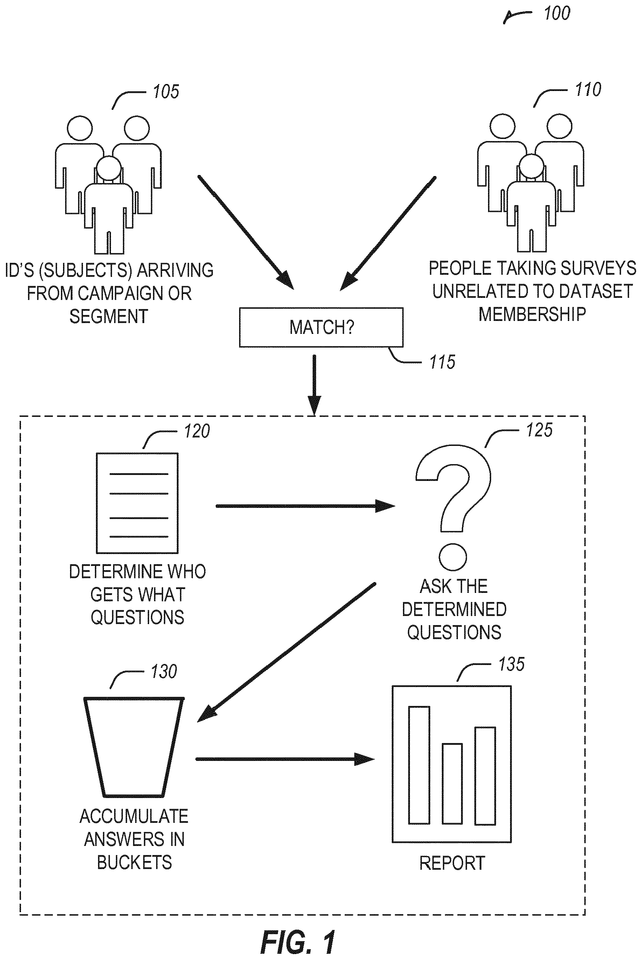

FIG. 1 illustrates an example process 100 for identifying or validating audience attributes. In the process 100, the data for identified subjects 105 may arrive at the presently disclosed system from an advertisement campaign or attribute segment. The data of identified subjects 105 may be a list of identities categorized as subjects who viewed an online advertisement that was part of an advertisement campaign. The identified subjects may be identified through the use of a tracking pixel, as an example. The data of identified subjects 105 may also be a list of identities categorized and supplied by a data provider which it is believed identify as having the same one or more similar attributes to be categorized into an attribute segment. The process 100 may include survey taking subjects 110, who have arrived at the system after being prompted to take a survey. At the match step 115, the system may determine if there is a match between the identified subjects 105 and the survey taking subjects 110. When a match occurs between the identified subjects 105 and the survey taking subjects 110, the system gains a broader attribute knowledge base about the subject and that attribute knowledge may be used to dynamically construct a survey to verify the attribute data about the subject, gain more information about a subject with those attributes, or both.

When the identified subjects 105 are a list of identities provided by a data provider, the data provider may have categorized the list as being a segment associated with one or more attributes. The list of identities may contain data for identifying the subjects, such as a name, a MAC address, or a known cookie or data object stored on the subjects computing device. The data provider creates these attribute segment lists for the purposes of selling them, as it delivers to an advertiser known attributes about a group subjects. For example, the data provider may identify a segment with the attribute of having an interest in purchasing a new car, but also identify the segment is specifically interested in sport utility vehicles. A segment of subjects with these known attributes is attractive to an advertiser that is attempting to market and advertise for a sport utility vehicle. While the data provider may claim a list of identities has certain attributes, their business will suffer should those claims prove to be untrue. The data provider may test the segment before it is sold. The presently disclosed system may be used to test the segment for the claimed attributes. The segment data from a data provider and the system sync at the match step 115. Once a subject is synced, a survey may be constructed to query the subject and test the claimed attribute beliefs about that subject.

At match step 115, the presently disclosed system may determine there is a match between an identified subject, such as from a data provider list, and a subject taking a survey. The presently disclosed system may perform question determination at step 120. Step 120 may include using the attribute data provided for the identified subject to dynamically select questions related to the attribute data. At step 125, the system may present the constructed survey to the subject, where the constructed survey includes the determined questions based on the attribute data. After the subject answers the determined questions, at step 130 the system may accumulate the answers given to the questions from all subjects into different buckets, such as according to attributes or segments. The answer buckets may then be used to report findings about the subjects at step 135, such as providing true attribute information related to the attribute beliefs of the identified subjects 105.

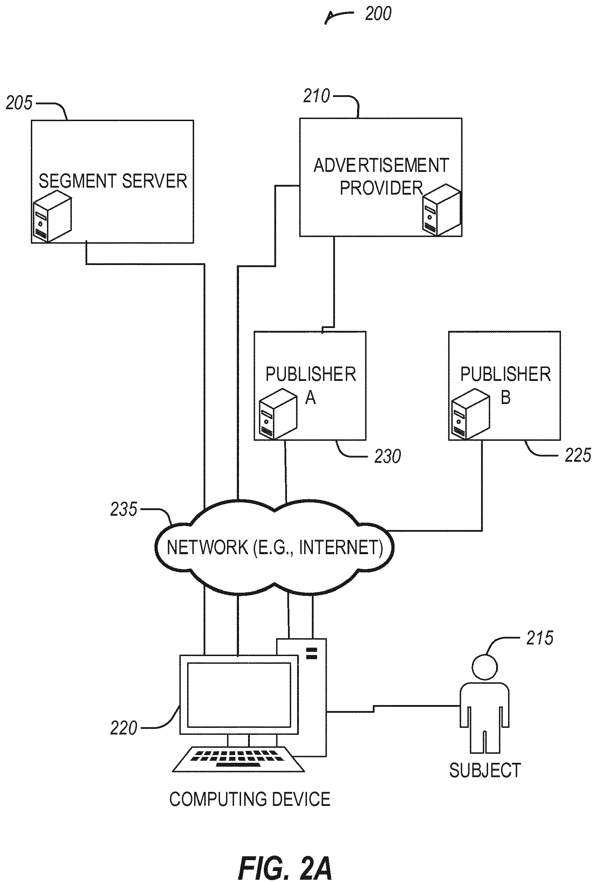

FIG. 2A illustrates the presently disclosed system 200 in accordance with some embodiments. A subject 215 may use a computing device 220, such as a personal computer, smartphone, or tablet, to access content across a network 235 (e.g., the Internet) from publisher A's server 230. Content provided across the network 235 by publishers may include information such as news articles, videos, recipes, and sports scores. For example, the content may be provided in the context of a content site, such as a website, a dedicated application on the computing device 220 (provided through and Application Programming Interface (API)), and the like. A publisher may display advertisements in conjunction with the content. A publisher may use the revenue from the advertisements on the content site to support the cost of running the content site. A publisher may attempt to attract advertisers by promoting the interests and demographics of the people which frequent the publisher's content site.

In an embodiment, a first step of the presently disclosed system may be to install a data object on a subject's computing device. An example of a data object is an Internet cookie, or just cookie, a small piece of data stored by the web browser. A cookie, in the context of a website stores information for a user, such as the user's preferred layout for a web page and it may track the interactions of the web browser, such as the web pages visited by the user. When a server is accessed by a computing device to retrieve a content site, image, or any other type of data over the Internet, the server may include a data object in the request response. When an advertiser has an advertisement campaign, such as advertisement images for a new shampoo, the advertisement images may be shown as part of a content site. A subject 215 may use a computing device 220 with an application to access content from Publisher A server 230. The content from Publisher A server 230 may have advertisement spaces. Publisher A server 230 directs the application on computing device 220 to retrieve digital advertisement images from the advertisement provider server 210. For example, when a subject 215 accesses the content from a publisher, such as the website for their local newspaper, the newspaper's web page may contain digital advertisement images. The web servers for the newspaper may not store the digital advertisement images, instead the code for the newspaper's web page may direct the subject's web browser to an advertisement provider server 210 to retrieve a digital advertisement image. The code for the content site may direct the application to retrieve a specific digital advertisement image. The code may not have a directive for a specific advertisement, instead the advertisement server may determine the digital advertisement image to provide to the application. The determination may be based on the website accessed by the subject, location of the subject, a priority list of advertisement campaigns, or a data retrieved from a data object installed in the application. When the advertisement provider server 210 responds with a digital advertisement image, the advertisement provider server 210 may include a data object to install in the subject's application (if the same data object is not already present). This may be a data object related to the advertisement campaign associated with the digital advertisement image that was received. For example, the advertisement campaign for the new shampoo may include a data object associated with the shampoo advertisement.

The digital advertisement image may include a tracking pixel. A tracking pixel is a pixel in an advertisement image. In order to retrieve the pixel, the application is directed to the segment server 205. In one example, the tracking pixel may have a specific Universal Resource Locator (URL) that specifies the particular digital advertisement image that the tracking pixel was part of. When the segment server 205 is contacted, it may record information such as increasing a counter to record the number of times a digital advertisement image was viewed. The segment server 205 may include a data object with the pixel response, such as a data object. From the embodiment of system 200, the computing device 220 has interfaced with Publisher A server 230 to retrieve content. The data object may contain information about the digital advertising image that contained the tracking pixel. For example, if the data object came from a tracking pixel in a digital advertisement image for a shampoo by Brand X and part of advertising Campaign Y, that information may be included in the data object. When the system servers interact with the data object, the digital advertisement image data, such as being for a shampoo by Brand X and part of advertising Campaign Y, may be accessed by the system.

In an embodiment, the digital advertisement image may have a unique advertisement identifier. The advertisement identifier may be used to locate information about the digital advertisement image in a database. The database may provide information about the digital advertisement image, such as the specific image used, the location the advertisement was displayed, and the time of day it was displayed. When the segment server 205 is contacted by the computing device 220, such as through a URL to retrieve the tracking pixel, the advertisement identifier for the digital advertisement image may be included as a parameter. The advertisement identifier may be included in the data object that is installed in the subject's computing device. Later, when the system accesses the data object, the advertisement identifier may be used to determine the digital advertisement image the subject 215 viewed. The data about the digital advertisement image which was displayed and the attribute information gathered by the system may be synchronized through the advertisement identifier.

The presently disclosed system may use a data object for each advertisement. For example, when a subject views Advertisement A and Advertisement B, each including a tracking pixel, the system may install a data object for Advertisement A and a data object for Advertisement B in the subject's computing device. In other examples, the system may use a single data object for each subject's computing device or each application on a subject's computing device. Instead of installing a data object for each advertisement, when the segment server 205 is contacted through the direction of a tracking pixel, the segment server 205 adds the advertisement identifier to the static data object. For example, when a subject views Advertisement A and Advertisement B, each including a tracking pixel, the segment server 205 adds an advertisement identifier for Advertisement A and an advertisement identifier for Advertisement B to the static data object.

While appearing redundant for both the advertisement campaign and the system to install a data object the computing device, in some environments, in some cases, a data object may only be accessed by the server that installed it, thus it is necessary for each server to install a separate data object. The advertiser of the advertisement campaign may have requested to work with the system, but the system servers are not capable of contacting the advertiser's data object. Thus there is a need for both the system to install a data object even when the advertiser has installed a data object, with each data object performing their respective functions.

The next step of the system is to determine the actual attribute information of the subject which received a digital advertisement image. Gathering actual attribute information about a subject may be performed by requesting information from the subject directly, such as through a survey. A request may be made to the subject to take a survey which may question the subject about themselves or about recent online digital advertisements they may have seen. After having a data object installed in the computing device 220 by segment server 205 from an interaction prompted by a tracking pixel, the subject 215 may visit a content site by another publisher and thus the computing device 220 contacts Publisher B server 225. To access the Publisher B content site, Publisher B may request the subject 215 complete a survey. The computing device 220 is directed to the segment server 205. The segment server 205 determines if a data object is installed in the computing device 220. If the segment server 205 finds a data object, the segment server 205 may determine the digital advertisement images the subject 215 has previously viewed based on the information, such as an advertisement identifier, contained in the data object. The segment server 205 may provide a survey to the computing device 220 for the subject 215 based on the digital advertisement images the subject 215 may have previously seen. When the subject 215 completes the survey, the computing device 220 may be granted access to the content from Publisher B server 225. A subject may be prompted to take a survey through multiple means.

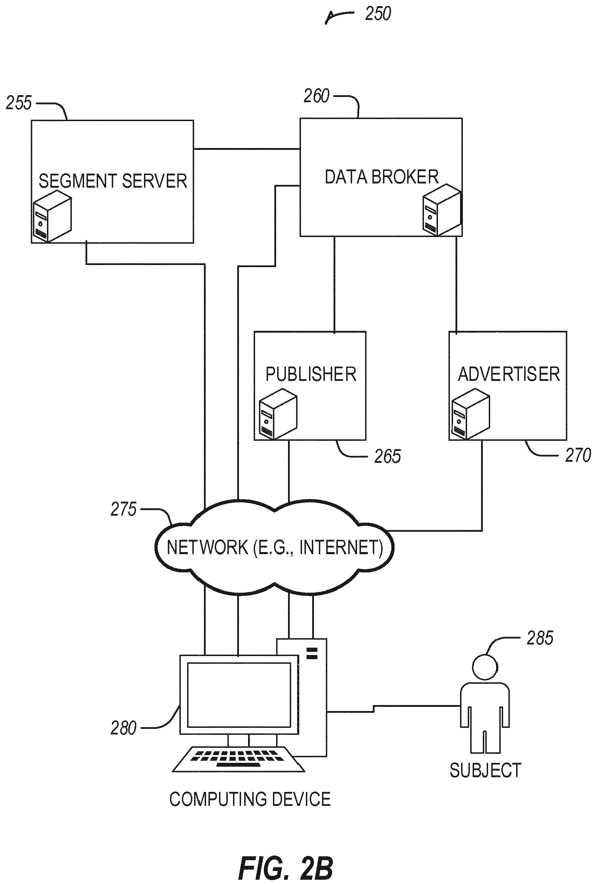

FIG. 2B illustrates the presently disclosed system 250 in accordance with some embodiments. A data broker server 260 may provide attribute segments, wherein as previously described an attribute segment is a group of subjects having one or more similar attributes. The data broker collects data about subjects to create attribute segments. A subject 285 may use a computing device 280 to interact online, such as with a content site provided by a publisher server 265 or an advertiser server 270. The publisher server 265 or advertiser server 270 may provide attribute information about the subject 285 to the data broker server 260. The data broker server 260 may interact directly with the computing device 280 of the subject 285, such as with data objects stored on the computing device 280. The data object may track online interactions of the subject 285 to help build an attribute profile which is reported to the data broker server 260 and stored.

The data broker server 260 may provide an attribute segment to the segment server 255 for segment validation. A subject 285, using a computing device 280, may be directed to the segment server 255 to take a survey. The segment server 255 may dynamically construct a survey for the subject 285. Using identifying characteristics, such as identification for the subject 285 or identification for the computing device 280, the segment server 255 may determine the subject 285 is part of one or more attribute segments provided by the data broker server 260. When such a match occurs, the segment server 255 may dynamically construct a survey based on the attributes the subject 285 is believed to have from the attribute segments the subject 285 is a member. The segment server 255 may provide the dynamically constructed survey to the computing device 280 of the subject 285. Based on the answers provided by the subject 285 to the dynamically constructed survey, the segment server 260 may validate that the subject 285 should be a member of the attribute segments provided by the data broker server 260.

A subject may be asked to take a survey when accessing content. A subject may be sent an email asking the subject to take a survey. A subject may be asked to take a survey when clicking on an advertisement for a product they are interested in, or the like.

For example, when a subject accesses a content site, such as a news article, the subject may be prompted with an option to take a survey or an option to take a survey may be presented in line with the content of the content site. There may be incentives for a subject to take a survey, either for the content provider or the subject. There may be no incentives and the option to take a survey is a choice for the subject. A content provider, such as a news organization uses advertisements to pay for their services. Instead of presenting a subject with an advertisement, an advertising agency may have the news organization present a subject with an option to take a survey in exchange for funds. In a similar fashion, a subject may be prompted to take a survey as part of their social media feed. Social media applications, such as Facebook and Twitter, include a feed of the posts from the people and groups that the subject follows on that social media application. As the subject progresses through their feed, the social media application may present the subject with the opportunity to take a survey. The social media application may incentivize the survey by allowing the subject to continue looking at their feed without any advertisements when the survey is complete. The social media application may use the survey as a gate, and only allow a subject to continue viewing the rest of their feed once the survey has been completed.

Continuing the example, when the subject agrees to take a survey, the system dynamically constructs a survey for the subject. The survey questions in the survey may depend upon a data object stored on the subject's computing device. Whether the computing device has a data object or not, the system may have a general set of survey questions to present to a subject, such as a set of attribute questions or a set of questions based on the content site where the subject agreed to take a survey (e.g., cooking related questions when the content site concerns cooking). The system may dynamically add questions to the general set of questions when a data object is located on the subject's computing device.

In another example, when a subject clicks on a digital advertisement image, the application on the subject's computing device may be directed to a content site for the item advertised. The direction to the advertised item's content site may contain parameters indicating the subject is arriving at the content site because they clicked on the advertisement image. The advertised item's content site may contact the system to then prompt a survey to appear on the subject's computing device.

In a further example, a subject may be contacted by an email, or other electronic communication, to take a survey. A subject may have provided an email address when shopping on a content site or when requesting additional information for an advertised product. The system may contact the subject by email to ask if they would like to provide further attribute information about themselves. The subject may be incentivized to complete the survey, such as with an entry to a drawing for a prize. When the subject follows the link provided in the email to the survey servers may locate the data store installed on the subject's computing device. Based on the located data objects, the system may present a survey to the subject for each data object. Alternatively, if a static data object is located on the subject's computing device, the system may retrieve the advertisement identifiers stored within the static data object. Based on the located advertisement identifiers, the system may present a survey to the subject for each advertisement identifier. For example, a subject may have viewed digital online advertisements for shampoo, snack bars, and dog food. The system may present a survey to the subject for each of the advertisements, with some of the collected attribute data applicable to all three advertisements, such as the gender of the subject.

The data object may contain information such as the advertisement identifier, when the advertisement was viewed, what content site the advertisement was placed on at the time of viewing, an identifier associated with the subject, the type of computing device, and the application used to view the advertisement on the computing device. When the system retrieves information from a data object installed on a subject's computing device, who has agreed to take a survey, the system may retrieve an advertisement identifier from the data object. The system may use the advertisement identifier to locate information about the digital advertisement image the subject viewed. The advertisement information may direct the types of questions asked in the survey. The survey may contain general demographic questions about the subject, such as the age, gender, and location of the subject. The survey may contain attribute questions, such as the subject's interests and opinions. The survey may contain questions based on the viewed advertisement, such as if the subject recalls seeing the advertisement and if the subject may be inclined to purchase the product after viewing the advertisement. The survey may contain questions related to the content site where the advertisement was viewed. The survey may contain questions related to the advertisement, such as the perception the subject has about the item in the advertisement. For example, if the item in the advertisement is Brand X shampoo, the survey may ask the subject which brand of shampoo the subject currently uses and how they feel it compares to Brand X shampoo. The survey may contain questions specific to the actual advertisement, such as if the subject remembers seeing the advertisement and what content site the advertisement appeared on.

In an embodiment, a database may store sets of questions. The system may select sets of questions for a survey based on the information retrieved from the data object. The system may select a set of questions depending upon the content site the data object indicates the advertisement was viewed on. For example, the system may select one set of questions if the advertisement was viewed on a sports related content site and may select a different set of questions if the advertisement was viewed on a news related content site. The system may select a first set of questions based only on the advertisement that was viewed and the system may select a second set of questions based only on the content site where the advertisement was viewed. The system may select a set of questions based on a combination of the advertisement viewed and the content site where the advertisement was viewed. If the system does not have a previous record of the subject, such as the subject's attribute information, the system may select a set of questions for the survey based upon assumptions about the subject, such as from the content site where the advertisement was viewed. For example, if the data object indicates the advertisement was viewed on a sports related content site, the system may select a set of questions directed toward a male. The system may dynamically select a set of various attribute questions in an attempt to define attribute characteristics for the subject and determine one or more attribute segments appropriate for the subject.

The system may have a unique subject identifier for a subject. The subject identifier may be used with a database to store data, such as attribute data, that has been collected for a subject. The database may store device identifiers associated with a subject, such as the subject's IP address or MAC address. The subject may be identified by a static data object installed on the subject's computing device. The static data object may be used to identify the subject each time the subject agrees to participate in a survey. The static data object may contain the subject identifier. The system may retrieve the subject identifier from the static data object. The system may use the subject identifier to look up subject data in the database and determine the attribute information already known about the subject. The system may choose to skip the asking survey questions of the subject that are already known. The system may choose to ask survey questions for which data is already recorded to verify the data is still correct.

In an embodiment, the attribute data collected from the surveys completed by subjects for the system may be aggregated to provide information about the true attributes of the people which view an advertisement. By using a static data object or device identifiers associated with a subject identifier, the system may collect a range of attribute data about a single person. Each time a subject completes a survey, the information is added to a database entry for the subject. For example, a subject may have multiple interests, such as sports, cooking, and dogs. The subject may visit content related to sports, cooking, and dogs, where on each content site the subject views advertisements in relation to sports, cooking, and dogs. Each of the content sites may have different advertisement providers and thus each advertisement provider is unaware of the subject's other two interests. When the subject chooses to complete a survey, the data that they viewed advertisements related to sports, cooking, and dogs, may be used to generate the survey questions. The survey may include attribute questions for the subject and questions about their interests or products related to sports, cooking, and dogs. The survey may include questions related to the products and services advertised on the content sites related to sports, cooking, and dogs. When the subject completes the generated survey, the answers to the survey questions are stored in the single subject identification. Through the aggregation of collected attribute data, the system has a record of the subject being interested in sports, cooking, and dogs, the answers from the recently completed survey, and in addition to any data gathered from previously completed surveys.

The aggregated data may provide both verified information about the subjects viewing an advertisement, but supplemental information about subjects' interests. Through the aggregation of the data, such as in the example, it may be determined a large number of visitors to a sports related content site are interested in dogs as well. The provider of the advertising space on the sports related content site may promote the space as a means for dog related advertisers to reach an interested audience. The aggregated data may show a cross interest between a subject matter and a product not previously known. The aggregated data may collect the data for subjects which have visited two different content sites and analyze how those subjects responded to an advertisement on one of the content sites. For example, the system may collect the subjects that may have visited content sites related to sports and cooking. Then the system may analyze how those subject responded to a product advertised on the cooking sites. The system may show those subjects responded well to the product advertised on the cooking sites, indicating an opportunity to reach more people by posting the advertisement on sports related content sites as well. The aggregated data may have shown the people visiting sports related content sites view the product advertised on the cooking related content sites favorably, and thus other people visiting sports related content sites may feel similarly.

When placing an online digital advertisement on a content site for a particular subject, assumptions about the attributes or segment attribute may be made. For example, it may be assumed that a sports related content site mostly reaches men. The aggregated data of the system may present data for the people that actually viewed the online digital advertisements. For example, to continue the sports related content site example, the aggregated data may show the actual viewership of the online digital advertisement on the sports related content site is 55% male, only a slight majority. By displaying advertisements targeted at men, advertisers on the sports related content site are missing 45% of the people viewing the advertisements. Based on the aggregated data from the system, advertisers would be advised to have less gender specific advertisements so that they reached more of the audience.

The aggregated data from the surveys may be compiled into reports for advertising agencies and product advertisers. The reported information may serve to verify the assumptions about the attributes of advertising spaces or be used to attract advertisers by showing the attributes that an advertising space may reach.

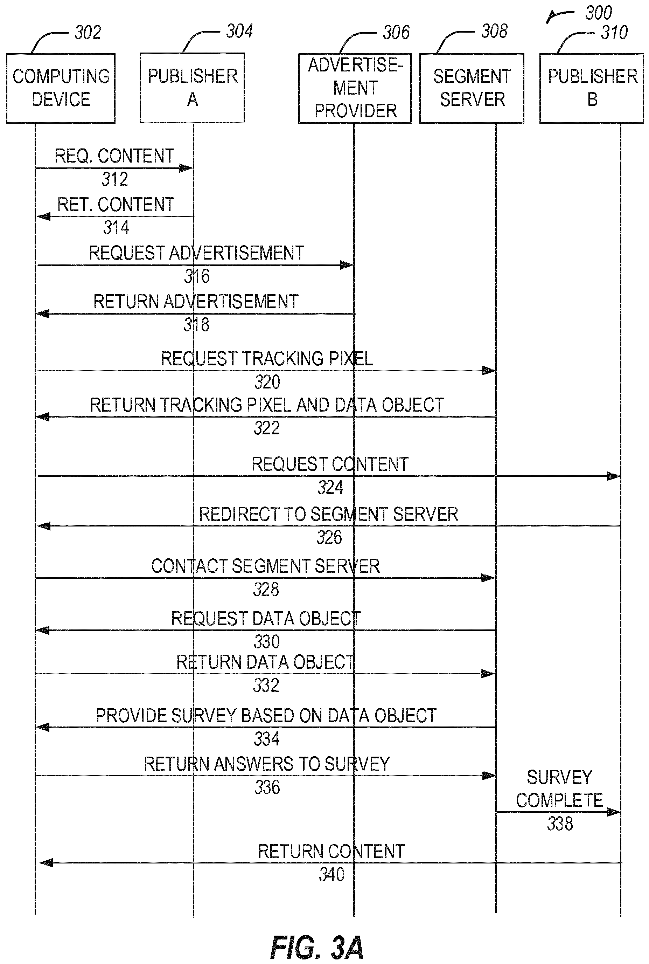

FIG. 3A illustrates a timing diagram 300 for the presently disclosed process to validate a subject in accordance with some embodiments. The timing diagram 300 includes a computing device 302, such as a personal computer or smartphone, used by a subject to access content over a network. The timing diagram 300 includes Publisher A 304 and Publisher B 310. Each publisher may be a content supplier, such as providing content for a website or providing content for a network connected application like Facebook. The timing diagram 300 includes an advertisement provider server 306 and the segment server 308. In an example, the timing diagram 300 includes the computing device 302 contacting Publisher A 304 first and contacting Publisher B 310 second. The reverse may be true, as may be contacting any number of publishers.

The timing diagram 300 shows the computing device 302 performing an operation to request content 312 from Publisher A 304. For example, when a subject directs the web browser on their computer to go to a website, the computer makes a request, over a network, to a server for the website to retrieve the content of the website. Publisher A 304 performs an operation to return the content 314 to the computing device 302. For example, when a content server receives a request for the content of a website, the content server sends the requested content back to the requesting computer.

When the computing device 302 receives the content, the content may include instructions to request an advertisement 316 from an advertisement provider 306. The request for an advertisement operation 316 may include information such as an identification of the requested content. The advertisement provider 306 may return an advertisement at operation 318 to the computing device 302. The advertisement returned for display on the computing device 302 may be based on the content. For example, a sports drink advertiser may have paid for advertisement space on a sports related website. When the computing device 302 performs operation 316 to request the advertisement, the request may include information that the computing device 302 is accessing the content of the sports related website. The advertisement provider 306 may return the advertisement for the sports drink.

The advertisement returned by the advertisement provider 306 may include a tracking pixel. The instructions in the advertisement may direct the computing device 302 to perform the operation 320 of requesting the tracking pixel from the segment server 308. The segment server 308 may perform the operation 322 of returning the tracking pixel to the computing device 302 and including a data object. For example, the data object may be an Internet cookie and include information to identify the subject to the segment server in the future and an identifier for the advertisement which directed the computing device 302 to request the tracking pixel. The data object may be installed on the computing device 302.

At a consecutively later time, the computing device 302 may request content at operation 324 from Publisher B 310, a content provider separate from Publisher A 304. Publisher B 310 may have a directive for requesters of the Publisher B 310 content to complete a survey. Publisher B 310 may receive funds for directing requesters to take a survey either instead of or in addition to digital advertisements. Publisher B 310 at operation 326, may send instructions to the computing device 302 to redirect the computing device 302 to the segment server 308.

As directed by the instructions from Publisher B 310, the computing device 302 performs operation 328 to contact the segment server 308 to take a survey. For example, a user may agree to take a survey. The segment server 308 requests the data object from the computing device 302 at operation 330. If the computing device 302 has a data object, the computing device 302 returns the data object to the segment server 308 at operation 332. Receiving the data object, the segment server 308 may retrieve information from a data base. For example, if the data object includes a subject identifier, the segment server 308 may use the subject identifier to retrieve previously collected data about the subject stored in the database. If the data object includes an advertisement identifier, the segment server 308 may retrieve information about an advertisement from a database, using the advertisement identifier. The database may store surveys or sets of survey questions used to construct a survey. Using the information retrieved from the database, such as the known attribute information about the subject and the viewed advertisement, the segment server 308 may dynamically construct a survey for the subject.

The segment server 308 returns the survey to the computing device 302 at operation 334. The subject may complete the provided survey on the computing device 302. When the survey is complete, the computing device 302 may return the answers to the completed survey to the segment server 308 at operation 336. Upon receiving the completed survey, the segment server 308 may perform operation 338 and send a message to Publisher B 310 that the survey has been completed. Publisher B 310 may utilize the completion of a survey as a gate for access to the content. In such an embodiment, Publisher B 310 may now allow the computing device 302 access to the content and return the content to the computing device at operation 340.

In an embodiment, if the computing device 302 does not have a data object, the computing device 302 returns an empty packet to the segment server 308. In this embodiment, the segment server 308 may return a digital advertisement to the computing device or may return a survey to the computing device 302 for completion by the subject. When the subject completes the survey, the segment server 308 may return a data object to be stored on the computing device 302 and to identify the subject the next time the subject's computing device 302 is directed to the segment server 308.

In another embodiment, the segment server 308 may not communicate with Publisher B 310 and instead send data to the computing device to allow the computing device access to the content of Publisher B 310. For example, the segment server 308 may provide the computing device 302 with a private URL only known to the system for the computing device to access Publisher B 310 content.

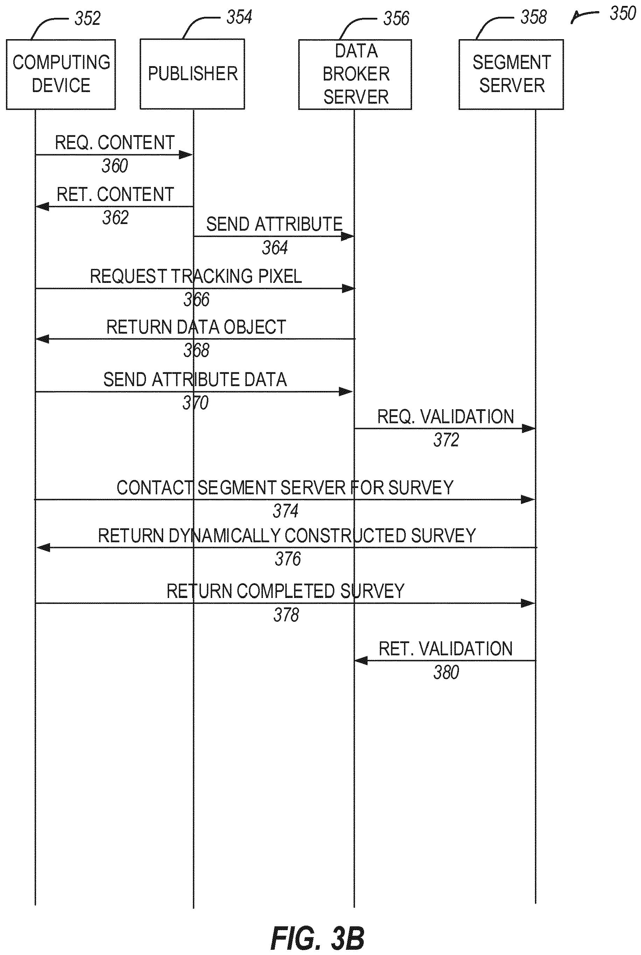

FIG. 3B illustrates a timing diagram 350 for the presently disclosed process to validate a segment in accordance with some embodiments. The timing diagram 350 includes a computing device 352, such as a personal computer or smartphone, used by a subject to access content over a network. The timing diagram 350 includes a content publisher 354. The timing diagram 350 includes a data broker server 356 and the segment server 358.

In the timing diagram 350, the computing device 352 may perform an operation to request content 360 from the publisher 354. The publisher 354 may store information identifying the computing device 352 and associate attribute information to computing device 352 based on the content requested or other interactions the computing device 352 had with the publisher 354. The publisher 354 may perform an operation to return the requested content 362 to the computing device. With the operation to return content 362 to the computing device 352, the publisher 354 may include a data object to be stored on the computing device 352. The publisher 354 may retrieve data collected by the data object stored on the computing device 352. The publisher 354 may perform an operation to send the collected attribute information 364 to a data broker server 356.

The data broker server 356 may be contacted directly by the computing device 352. For example, the computing device 352 may perform an operation to request a tracking pixel 366 from the data broker server 356. The data broker server 356 may perform an operation to return a data object 368 to be stored on the computing device 352. The data object stored on the computing device 352 may collect attribute data based on the interactions of the computing device 352. The data broker server may perform an operation to retrieve the attribute data 370 from the computing device 352. The data broker server 356 collects attribute data from multiple computing devices and to create attribute segments.

The data broker server 356 may perform an operation to request validation 372 for an attribute segment from the segment server 358. A computing device 352, may be directed to the segment server 358 to take a survey. The computing device 352 may perform an operation to contact the segment server for survey 374. Using the identification characteristics provided by the computing device 352, the segment server 358 may match the computing device to a subject provided in the attribute segment data provided by the data broker server 356. Based on the attribute segment information, the segment server 358 may dynamically construct a survey for the subject using the computing device 352. The segment server 358 may perform an operation to return a dynamically constructed survey 374 to the computing device 352. When the subject completes the survey, the computing device 352 may perform an operation to return the completed survey 378 to the segment server 358. The segment server 358 may utilize the information provided in the completed survey to validate the attribute information of the attribute segment. The segment server 358 may perform an operation to return the validation information 380 to the data broker server 356. The validation information may contain information about the accuracy of the believed attributes for the subjects which are members of the attribute segment.

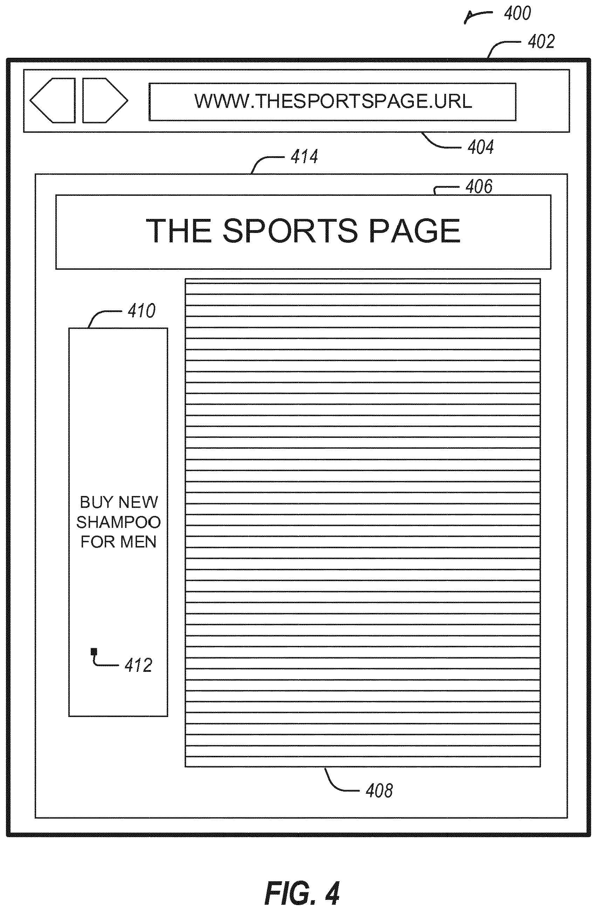

FIG. 4 illustrates a display 400 with a content site, in accordance with some embodiments. The display 400 may display an application 402 for accessing content on a network, such as a web browser or social media application. The application 402 may include navigation controls 404 for navigating to content and content sites over the network. The application 402 may display the content site 414. The content site 414 may include elements such as a banner 406, content 408, and an advertisement 410. The advertisement 410 may include a tracking pixel 412. The tracking pixel 412 may not be visible or apparent to a person viewing the content site 414 or the advertisement 410. When the application 402 is directed to request an advertisement 410, from a first server, by the coded instructions comprising the content site 414, the application may receive additional instructions encoded in the advertisement 410 to request a tracking pixel 412 from a second server, such as a segment server. The application 402 may request the tracking pixel 412 from a second server. The second server may respond with the tracking pixel 412 and a data object to be stored in the application 402 or the computing device executing the application 402.

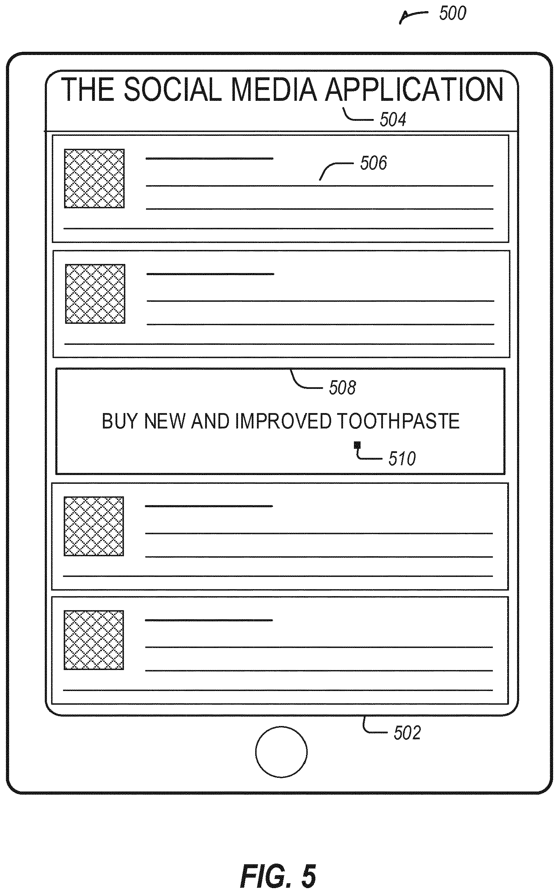

FIG. 5 illustrates a mobile device 500 with a display 502 of a content site, in accordance with some embodiments. The mobile device 500 may include a display 502 to present applications to a user of the mobile device 500. The mobile device 500 may have applications for receiving content over a network, such as a social media application 504. The social media application 504 may include posts 506 by users of the social media service. The posts 506 may be part of a feed for the social media application 504. The social media application 504 may include an advertisement 508 in the feed. The advertisement 508 may include a tracking pixel 510. The tracking pixel 510 may prompt the mobile device 500 to request the tracking pixel 510 from a segment server. The segment server may return the tracking pixel and a data object to store on the mobile device.

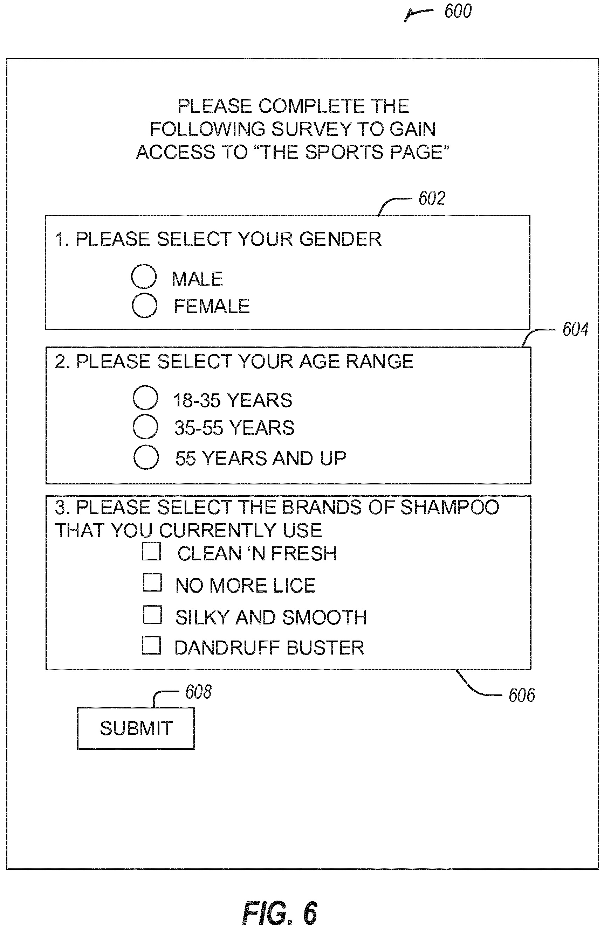

FIG. 6 illustrates a survey 600, in accordance with some embodiments. The survey 600 may be displayed on a computing device through an application which accesses content over a network. The survey 600 may be displayed when a subject attempts to access a content site. The survey 600 may be displayed when a subject chooses to take a survey when prompted through an email or notification over social media. The survey 600 may present questions to a subject to learn attribute information about the subject, such as the gender of the subject in first question 602 and the age of the subject in second question 604. Attribute information may include questions such as the location of the subject, the marital status of the subject, and the education level of the subject. The survey 600 may present questions to a subject based on the advertisements the system has determined a subject may have viewed. For example, the system may collect information from a data object located on the subject's computing device. The data object may indicate which advertisements a subject may have viewed, such as with advertisement identifiers. The system may dynamically construct a survey 600 based on the advertisements identified as being viewed by the subject. The survey 600 may ask a third question 606 related to shampoo if the system determines the subject has viewed an advertisement for shampoo. When a subject completes the survey 600, the subject may click the submit button 608 to send the survey answers to the system. The survey 600 may have questions where a subject may only select one of the presented options, such as first question 602 and second question 604. The survey may have questions where a subject may select multiple options presented, such as third question 606. The survey may have questions which require the subject to type in an answer.

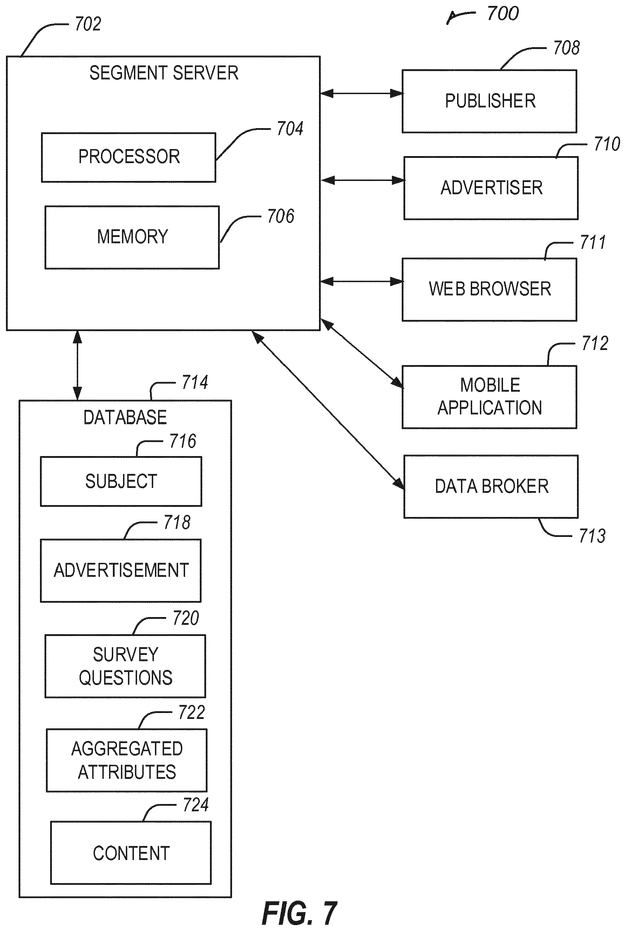

FIG. 7 illustrates the presently disclosed system 700 in accordance with some embodiments. The system 700 includes a segment server 702 and a database 714 (which may include a plurality of databases). The segment server 702 may be in communication with a publisher server 708, an advertiser server 710, a computing device with a web browser 711, a computing device with an application 712, and a data broker 713. In an example, the web browser 711 and the mobile application 712 may be used interchangeably for purposes of communication with the segment server 702 (although presentation of information to a user, such as a display device, may differ). The web browser 711 and mobile application 712 are two examples of electronic content presenters the segment server 702 may communicate with, but should not be limited to those examples. In an example, an API may be used to communicate with the web browser 711, the mobile application 712, the data broker 713, the publisher 708, or the advertiser 710.

The database 714 may include a subject database 716, an advertisement database 718, a survey question database 720, an aggregated attributes database 722, and a content database 724. The database 714 may include references such that data stored in one of the sub databases may be identified as corresponding with data stored in another of the sub databases (e.g., survey answers may correspond with attribute information or advertisement data may correspond with information identifying a subject). The segment server 702 may be in communication with the database 714 to retrieve and store information, such as attribute information, survey question and answer information, interest information, advertisement information, content and publisher information, counters, thresholds, or the like.

The segment server 702 may include a processor 704 and memory 706. The processor 704 may be communicatively coupled to the memory 706. The memory 706 may store instructions, which when executed by the processor 704, may cause the processor 704 or the segment server 702 to perform operations, such as those described herein. For example, the segment server 702 may perform operations to receive a data object from the web browser 711 or the mobile application 712 via an API, the data object containing information such as a subject identifier, an advertisement identifier, and a content site identifier.

The segment server 702 may provide survey questions to the web browser 711 or the mobile application 712 from the segment server 702 (e.g., from the database 714) via the API. The segment server 702 may receive an answer to at least one of the survey questions provided by the subject through the web browser 711 or through the mobile application 712, the answer sent via the API to the segment server 702.

The segment server 702 may determine which questions to ask a subject in a survey by consulting the database 714 for previously recorded attribute information about the subject, advertisements viewed by the subject, and content viewed by the subject. Questions may be determined by attribute data provided by the data broker 713. In an example, to determine which questions to ask a subject in a survey, the processor 704 may determine a group of questions to put in the survey associated with an advertisement the subject may have seen and when the subject has indicated they are within a predetermined age range.

In an example, the segment server 702 may construct a survey for a subject and determine the subject has seen an advertisement for a sports car. The survey question database 720 may provide a set of general questions for any subject which has viewed the sports car advertisement. In an example, the data broker 713 may provide attribute information about a subject, such as an attribute that the subject has an interest in purchasing a sports car. The survey question database 720 may provide a set of questions to determine if the subject attribute information provided by the data broker 713 is valid. The processor 704 of the segment server 702 may retrieve information about the subject from the subject database 716. In the example, the subject may have previously completed a survey and provided attribute information, such as the subject's age, which is stored in the subject database 716. The survey questions associated with the sports car advertisement may have additional questions for subjects matching a segment attribute, such as questions about the next car a subject may purchase if the subject is in the 45-55 year range as that may be considered a primary age when people purchase sports cars. The processor 704 may query the subject database 716 and determine the subject's age is within the 45-55 year age range and add the additional questions to the construction of the survey.

For each survey completed, the answers to the survey may be stored in the aggregated attributes database 722. For example, an advertising campaign may exist for an advertisement identified in the advertisement database 718 with identification XY324. Each time subjects view the advertisement on their computing device, such as with a web browser 711 or mobile application 712, the segment server 702 may install a data object on the computing device, wherein the data object includes the identification XY324. When a subject agrees to participate in a survey provided by the segment server 702, the segment server 702 may read the data object and determine the subject has seen the advertisement associated with identification XY324. The segment server 702 may dynamically construct a survey from the questions stored in survey question database 720 based on the subject having seen the advertisement associated with identification XY324. The segment server 702 may receive the answers from each of the surveys provided to subjects. The segment server 702 may store the answers in the aggregated attributes database 722. The answers from surveys for the advertisement associated with identification XY324 may be stored in the aggregated attributes database 722 with an association that those answers correspond to the advertisement identifier XY324. The segment server 702 may collect the answers associated with an advertisement campaign to provide attribute information about the types of people that have viewed the advertisement and any other information gathered from the survey questions asked. For example, by aggregating the answer data associated with advertisement identifier XY324, a report may be generated for the types of people that viewed the advertisement and other attribute collected information such as the opinion people have of the product in the advertisement and the similar products those people prefer.

Data identifying subjects may be stored in the subject database 716. A data broker 713 may provide data about a set of subjects, including identifying information and attribute information. The data broker 713 may request the attribute data be validated for the set of subjects. The segment server 702 may determine if any of the subjects provided by the data broker 713 match any subjects stored in the subject database 716. If a match is found, the segment server 702 may provide validation based on the attribute data stored in the aggregated attribute database 722. When a subject agrees to participate in a survey provided by the segment server 702, the segment server 702 may read a data object from the web browser 711 or mobile application 712. The data object may identify the subject as a subject stored in the subject database 716 or a subject from the set of subjects provided by the data broker 713. The segment server 702 may dynamically construct a survey from the questions stored in the survey question database 720 based on the attribute information provided by the data broker 713. The segment server 702 may receive the answers from each of the surveys provided to subjects. The segment server 702 may store the answers in the aggregated attributes database 722. The answers from surveys may be stored in the aggregated attributes database 722 with an association to the requested attribute validation from the data broker 713. The segment server 702 may aggregate the answers provided by the subject set and any other information gathered from the survey questions asked.

The aggregated attribute data collected through the use of data objects and survey answers may create an extensive mapping of the interests and advertisement viewing habits of the subjects reached. The data related to subjects may include attribute information (e.g., age, gender, location), content sites the subject has viewed (e.g., websites, social media platforms), the interests of a subject (e.g., sports, cooking, dogs), the advertisements the subject has viewed (e.g., Fresh and Breezy Shampoo Online Advertisement Campaign Spring 2018), the subject's opinion on both the advertised product and competing products, the shopping habits of a subject (e.g. the brands of shampoo a subject has purchased in the last year), and quantity of views (e.g., the number of times an advertisement was viewed, the number of times a content site was visited). The data recorded for each subject may be combined based on certain parameters to then discover the attribute composition of another area for that group. For example, the presently disclosed system may query the aggregated data, stored in a database, for a group comprising all women between the age of 35 and 55 that have viewed a content site for gardening. The system may then determine what percentage of the group has an interest in cats. By collecting data for each advertisement viewed and using the survey questions and answers to verify and gain additional knowledge about the subject, a diverse amount of information may be gained, including information unrelated to the advertisements or content sites the subject may have viewed.

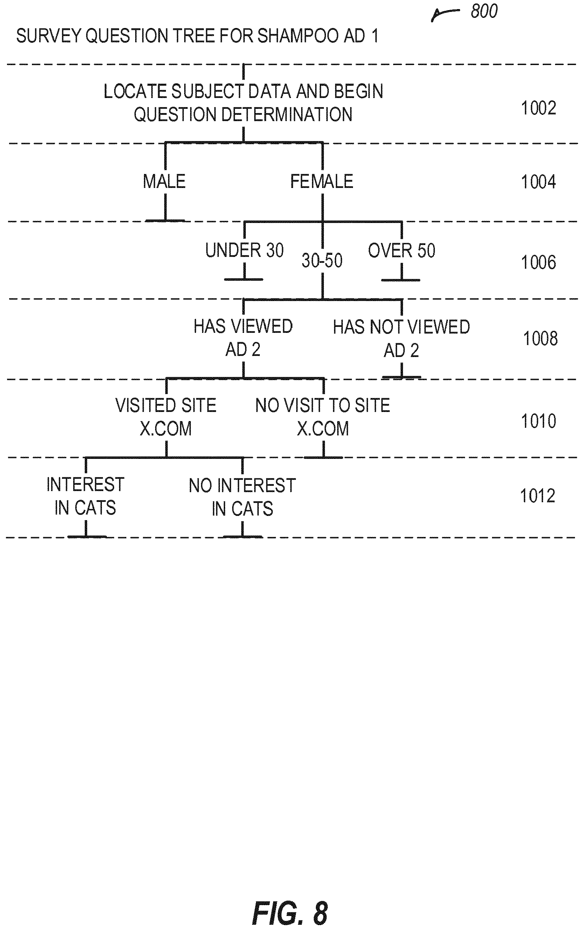

FIG. 8 illustrates a survey question tree 800, in accordance with some embodiments. FIG. 8 illustrates a possible path along the survey question tree 800, where more paths are possible but not illustrated. The survey question tree 800 illustrates how a survey of questions may be dynamically constructed based on the previously recorded attribute information known about a subject. Based on what is known about the subject may determine which questions are presented to the subject. At each branch of the tree, questions may be added to the construction of the survey or the system may move on to the next branch of the survey question tree without adding any questions to the survey construction. If information is not known about a subject to determine the questions to present, the system may determine to either present a default set of questions or no questions and move on to the next branch of the tree. If information is not known about a subject to determine the questions to present, the survey question tree traversal may end and the construction of questions for the survey may be complete.

In the illustrated example scenario for a survey question tree 800, the presently disclosed system may have read the information from a data object located on a subject's computing device and determined the subject had viewed "Shampoo Ad 1." Based on the determination that the subject had viewed "Shampoo Ad 1", the proof sore system may begin the survey question tree traversal. At step 802, the system may locate the data for the subject stored in a database to gather the information currently known about the subject and begin the question determination process. At step 804, the system may determine if the subject is male or female. Based on the determination, questions may be added to the construction of the survey or the system may move on to the next branch of the survey question tree without adding any questions to the survey construction.

The determination of a question path may have multiple possible paths, not just binary. For example, the presently disclosed system may determine which range of values a subject falls within to determine which branch to follow. In the illustrated example of a survey question tree 800, at step 806, there are three possible branches, based on the age of the subject. In the illustrated example, the branches are for a subject under age 30, between the ages of 30 and 50, and over 50 years of age, with the example subject falling in the between 30 and 50 years of age range.

The construction of the survey may be determined by what other advertisements in the advertisement campaign the subject may have seen. In the illustrated example, the shampoo advertiser may have two advertisements in the campaign, "Shampoo Ad 1" and "Shampoo Ad 2". At step 808, the system may determine if the subject has previously viewed "Shampoo Ad 2". If the system determines the subject has previously viewed "Shampoo Ad 2", this may lead to including questions such as if the subject has purchased the shampoo in the advertisement campaign or how the subject's opinion of "Shampoo Ad 1" compares to "Shampoo Ad 2".

The construction of the survey may include questioning based on the content sites the subject has visited. In the illustrated example, at step 810, the system may determine if the subject has visited a content site. If the system determines the subject has visited a content site, the system may include questions to verify the subject or questions about the subject's interests as it relates to the subject matter on the content site. For example, if the content site relates to gardening, the system may present questions related to the subject's interest level in gardening. This type of questioning may allow for the system to expand the depth of the information for the subject.

The construction of the survey may include questions outside the area of the advertisement campaign to determine other interests and attributes for the subject. For example, in the illustrated example at step 812, the system may determine if the subject has previously indicated they have an interest in cats. The system may use this as an opportunity to present questions related to an interest in cats to gain additional background information on the subject.

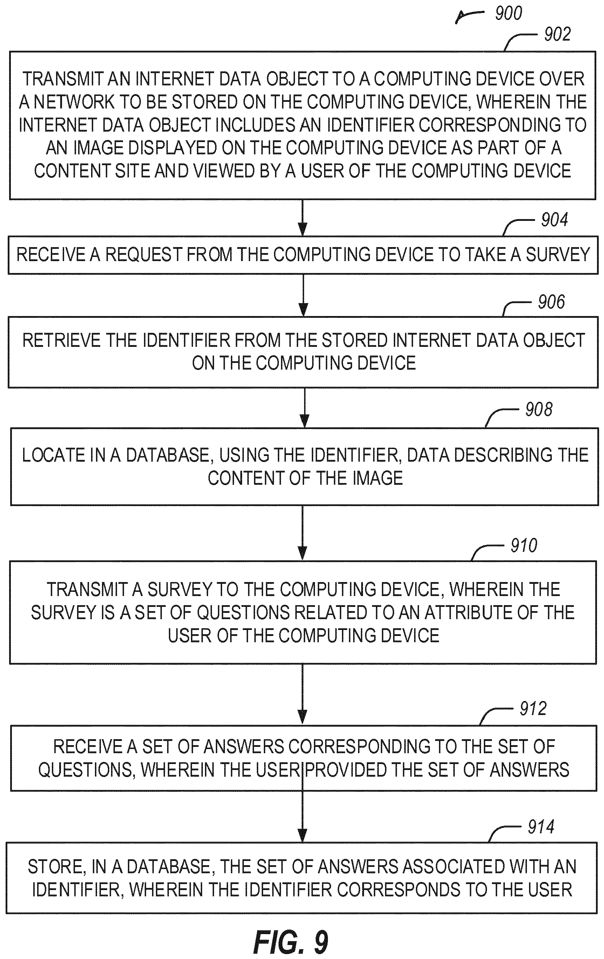

FIG. 9 illustrates a flow chart showing a method 900 for completing a verification, according to some embodiments. The method 900 includes an operation 902 to transmit an Internet data object to a computing device over a network, for storage on the computing device. The Internet data object includes an identifier corresponding to an image which was displayed on the computing device as part of a content site and viewed by a user of the computing device. For example, the segment server, when contacted by a computing device through a tracking pixel, may transmit a data object to the computing device with an identification for the advertisement which was viewed on the computing device, where the advertisement contained the tracking pixel. The method 900 includes the operation 904 to receive a request from the computing device to take a survey. For example, the user may be presented with an opportunity to take a survey, such as when attempting to access a content site. When the user accepts the survey opportunity, the segement server may receive the request.

The method 900 includes the operation 906 to retrieve the identifier from the Internet data object stored on the computing device. For example, after receiving the request to take a survey, the segment server may determine if the user has viewed any advertisements on the computing device. The segment server may determine this by collecting the data stored in the data object stored on the computing device. The data stored in the data object may include identifiers for the advertisements the user has viewed. The data object may contain additional data such as the content site the advertisement was part of, the time and frequency of the advertisement and content site where each advertisement was viewed, and a user identifier.

The method 900 includes the operation 908 to locate, in a database, data describing the content of the image. For example, the advertisement identifier stored in the data object may be used to locate information about the advertisement, such as the details about the product advertised and which image from the advertisement campaign was viewed. The method 900 includes the operation 910 to transmit a survey to the computing device. The survey includes a set of questions related to an attribute of the user of the computing device. For example, the survey may include questions about the user, such as attribute information concerning their age, gender, hobbies, and location. The survey may include questions such as the user's thoughts on a product or which products the user intends on purchasing.

The method 900 includes an operation 912 to receive a set of answers from the user, where the set of answers corresponds to the set of questions. For example, the user may complete the survey by answering one or more of the questions of the survey. The answers provided by the user are transmitted back to the segment server. The method 900 includes the operation 914 to store the set of answers by associating them with a user identifier, where the user identifier corresponds to the user. For example, when the segment server receives the answers from the user, the segment server may store the answers in a database, associated with a user identifier. The answers may be used to create a profile for the user.

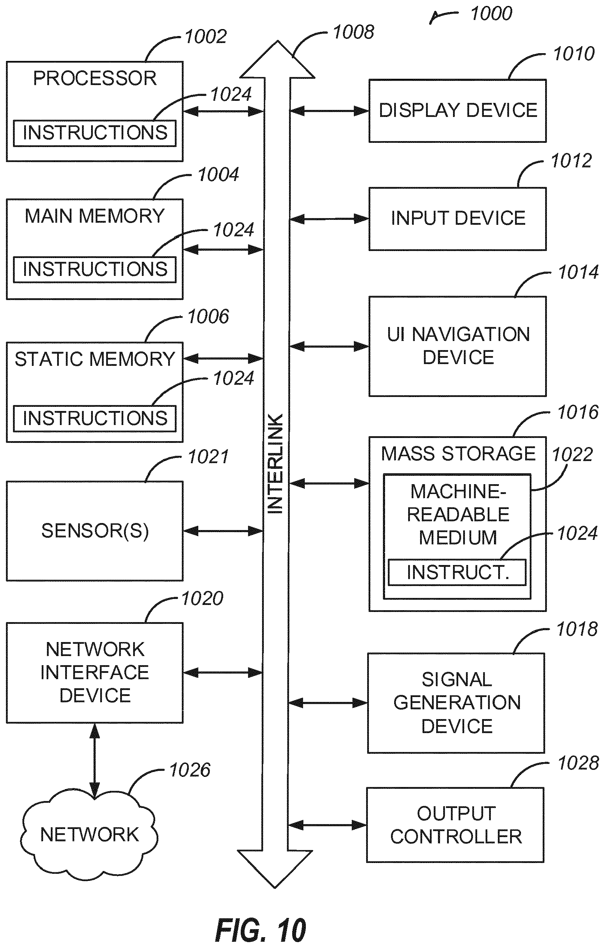

FIG. 10 illustrates a block diagram of an example machine 1000 upon which any one or more of the techniques (e.g., methodologies) discussed herein may perform. In alternative embodiments, the machine 1000 may operate as a standalone device or may be connected (e.g., networked) to other machines. In a networked deployment, the machine 1000 may operate in the capacity of a server machine, a client machine, or both in server-client network environments. In an example, the machine 1000 may act as a peer machine in peer-to-peer (P2P) (or other distributed) network environment. The machine 1000 may be a personal computer (PC), a tablet PC, a set-top box (STB), a personal digital assistant (PDA), a mobile telephone, a web appliance, a network router, switch or bridge, or any machine capable of executing instructions (sequential or otherwise) that specify actions to be taken by that machine. Further, while only a single machine is illustrated, the term "machine" shall also be taken to include any collection of machines that individually or jointly execute a set (or multiple sets) of instructions to perform any one or more of the methodologies discussed herein, such as cloud computing, software as a service (SaaS), other computer cluster configurations.

Machine (e.g., computer system) 1000 may include a hardware processor 1002 (e.g., a central processing unit (CPU), a graphics processing unit (GPU), a hardware processor core, or any combination thereof), a main memory 1004 and a static memory 1006, some or all of which may communicate with each other via an interlink (e.g., bus) 1008. The machine 1000 may further include a display unit 1010, an alphanumeric input device 1012 (e.g., a keyboard), and a user interface (UI) navigation device 1014 (e.g., a mouse). In an example, the display unit 1010, input device 1012 and UI navigation device 1014 may be a touch screen display. The machine 1000 may additionally include a storage device (e.g., drive unit) 1016, a signal generation device 1018 (e.g., a speaker), a network interface device 1020, and one or more sensors 1021, such as a global positioning system (GPS) sensor, compass, accelerometer, or other sensor. The machine 1000 may include an output controller 1028, such as a serial (e.g., Universal Serial Bus (USB), parallel, or other wired or wireless (e.g., infrared (IR), near field communication (NFC), etc.) connection to communicate or control one or more peripheral devices (e.g., a printer, card reader, etc.).

The storage device 1016 may include a machine readable medium 1022 on which is stored one or more sets of data structures or instructions 1024 (e.g., software) embodying or utilized by any one or more of the techniques or functions described herein. The instructions 1024 may also reside, completely or at least partially, within the main memory 1004, within static memory 1006, or within the hardware processor 1002 during execution thereof by the machine 1000. In an example, one or any combination of the hardware processor 1002, the main memory 1004, the static memory 1006, or the storage device 1016 may constitute machine readable media.

While the machine readable medium 1022 is illustrated as a single medium, the term "machine readable medium" may include a single medium or multiple media (e.g., a centralized or distributed database, and/or associated caches and servers) configured to store the one or more instructions 1024. The term "machine readable medium" may include any medium that is capable of storing, encoding, or carrying instructions for execution by the machine 1000 and that cause the machine 1000 to perform any one or more of the techniques of the present disclosure, or that is capable of storing, encoding or carrying data structures used by or associated with such instructions. Non-limiting machine readable medium examples may include solid-state memories, and optical and magnetic media.

The instructions 1024 may further be transmitted or received over a communications network 1026 using a transmission medium via the network interface device 1020 utilizing any one of a number of transfer protocols (e.g., frame relay, internet protocol (IP), transmission control protocol (TCP), user datagram protocol (UDP), hypertext transfer protocol (HTTP), etc.). Example communication networks may include a local area network (LAN), a wide area network (WAN), a packet data network (e.g., the Internet), mobile telephone networks (e.g., cellular networks), Plain Old Telephone (POTS) networks, and wireless data networks (e.g., Institute of Electrical and Electronics Engineers (IEEE) 802.11 family of standards known as Wi-Fi®, IEEE 802.16 family of standards known as WiMax®), IEEE 802.15.4 family of standards, peer-to-peer (P2P) networks, among others. In an example, the network interface device 1020 may include one or more physical jacks (e.g., Ethernet, coaxial, or phone jacks) or one or more antennas to connect to the communications network 1026. In an example, the network interface device 1020 may include a plurality of antennas to wirelessly communicate using at least one of single-input multiple-output (SIMO), multiple-input multiple-output (MIMO), or multiple-input single-output (MISO) techniques. The term "transmission medium" shall be taken to include any intangible medium that is capable of storing, encoding or carrying instructions for execution by the machine 1000, and includes digital or analog communications signals or other intangible medium to facilitate communication of such software.
Example 1 is a method comprising: transmitting a data object to a computing device over a network to be stored on the computing device, wherein the data object includes, an identifier corresponding to an image displayed on the computing device as part of a content site, the image viewed by a user of the computing device; receiving a request from the computing device to take a survey, the request received in association with the user visiting a second content site; retrieving the identifier from the data object on the computing device; locating in a database, using the identifier, data describing the content of the image; transmitting a survey to the computing device, wherein the survey is a set of questions related to an attribute of the user of the computing device; receiving a set of answers corresponding to the set of questions, wherein the user provided the set of answers; storing, in a database, the set of answers associated with a user identifier and classifying the user as a viewer of the image, wherein the identifier corresponds to the user; and generating a report for the image based on a collection of answers, wherein the collection of answers includes answers from one or more users classified as a viewer of the image.
In Example 2, the subject matter of Example 1 includes, wherein: the data object on the computing device includes a user identifier; and locating, in a database, using the user identifier, user data, wherein the user data includes demographic information and sets of answers from surveys.
In Example 3, the subject matter of Examples 1-2 includes, wherein: the data object on the computing device includes an identification of the content site.
In Example 4, the subject matter of Example 3 includes, wherein the set of questions further includes questions related to the content site.
In Example 5, the subject matter of Examples 1-4 includes, wherein the set of questions further includes questions related to personal interests of the user.
In Example 6, the subject matter of Examples 2-5 includes, wherein the survey includes a set of questions based on the user data stored in the database.
In Example 7, the subject matter of Examples 2-6 includes, wherein the survey includes a set of questions based on a combination of at least two of: the content of the image, the content site, and the user data.
Example 8 is a system for audience attribute identification comprising: at least one processor; and memory including instructions that, when executed by the at least one processor, cause the at least one processor to: transmit a data object to a computing device over a network to be stored on the computing device, wherein the data object includes, an identifier corresponding to an image displayed on the computing device as part of a content site, the image viewed by a user of the computing device; receive a request from the computing device to take a survey, the request received in association with the user visiting a second content site; retrieve the identifier from the data object on the computing device; locate in a database, using the identifier, data describing the content of the image; transmit a survey to the computing device, wherein the survey is a set of questions related to an attribute of the user of the computing device; receive a set of answers corresponding to the set of questions, wherein the user provided the set of answers; store, in a database, the set of answers associated with a user identifier and classifying the user as a viewer of the image, wherein the identifier corresponds to the user; and generate a report for the image based on a collection of answers, wherein the collection of answers includes answers from one or more users classified as a viewer of the image.
In Example 9, the subject matter of Example 8 includes, wherein: the data object on the computing device includes a user identifier; and further instruction to locate, in a database, using the user identifier, user data, wherein the user data includes demographic information and sets of answers from surveys.
In Example 10, the subject matter of Examples 8-9 includes, wherein: the data object on the computing device includes an identification of the content site.
In Example 11, the subject matter of Examples 8-10 includes, wherein the set of questions further includes questions related to the content site.
In Example 12, the subject matter of Examples 8-11 includes, wherein the set of questions further includes questions related to personal interests of the user.
In Example 13, the subject matter of Examples 9-12 includes, wherein the survey includes a set of questions based on the user data stored in the database.
In Example 14, the subject matter of Examples 9-13 includes, wherein the survey includes a set of questions based on a combination of at least two of: the content of the image, the content site, and the user data.
Example 15 is at least one computer readable medium including instructions for audience attribute identification that when executed by at least one processor, cause the at least one processor to: transmit a data object to a computing device over a network to be stored on the computing device, wherein the data object includes, an identifier corresponding to an image displayed on the computing device as part of a content site, the image viewed by a user of the computing device; receive a request from the computing device to take a survey, the request received in association with the user visiting a second content site; retrieve the identifier from the data object on the computing device; locate in a database, using the identifier, data describing the content of the image; transmit a survey to the computing device, wherein the survey is a set of questions related to an attribute of the user of the computing device; receive a set of answers corresponding to the set of questions, wherein the user provided the set of answers; store, in a database, the set of answers associated with a user identifier and classifying the user as a viewer of the image, wherein the identifier corresponds to the user; and generate a report for the image based on a collection of answers, wherein the collection of answers includes answers from one or more users classified as a viewer of the image.
In Example 16, the subject matter of Example 15 includes, wherein: the data object on the computing device includes a user identifier; and further instruction to locate, in a database, using the user identifier, user data, wherein the user data includes demographic information and sets of answers from surveys.
In Example 17, the subject matter of Examples 15-16 includes, wherein: the data object on the computing device includes an identification of the content site.
In Example 18, the subject matter of Examples 15-17 includes, wherein the set of questions further includes questions related to the content site.
In Example 19, the subject matter of Examples 15-18 includes, wherein the set of questions further includes questions related to personal interests of the user.
In Example 20, the subject matter of Examples 16-19 includes, wherein the survey includes a set of questions based on the user data stored in the database.
Example 21 is at least one machine-readable medium including instructions that, when executed by processing circuitry, cause the processing circuitry to perform operations to implement of any of Examples 1-20.
Example 22 is an apparatus comprising means to implement of any of Examples 1-20.
Example 23 is a system to implement of any of Examples 1-20.
Example 24 is a method to implement of any of Examples 1-20.

## Claims

1. A method comprising:
transmitting a data object to a computing device over a network to be stored on the computing device, wherein the data object includes an identifier corresponding to an image displayed on the computing device as part of a content site, the image viewed by a user of the computing device;
receiving a request from the computing device to take a survey, the request received in association with the user visiting a second content site;
retrieving the identifier from the data object on the computing device;
locating in a database, using the identifier, data describing the content of the image;
transmitting a survey to the computing device, wherein the survey is a set of questions related to an attribute of the user of the computing device;
receiving a set of answers corresponding to the set of questions, wherein the user provided the set of answers;
storing, in a database, the set of answers associated with a user identifier and classifying the user as a viewer of the image, wherein the identifier corresponds to the user; and
generating a report for the image based on a collection of answers, wherein the collection of answers includes answers from one or more users classified as a viewer of the image.

2. The method of claim 1, wherein:
the data object on the computing device includes a user identifier; and
locating, in a database, using the user identifier, user data, wherein the user data includes demographic information and sets of answers from surveys.

3. The method of claim 1, wherein:
the data object on the computing device includes an identification of the content site.

4. The method of claim 3, wherein the set of questions further includes questions related to the content site.

5. The method of claim 1, wherein the set of questions further includes questions related to personal interests of the user.

6. A system for audience attribute identification comprising:
at least one processor; and
memory including instructions that, when executed by the at least one processor, cause the at least one processor to:
transmit a data object to a computing device over a network to be stored on the computing device, wherein the data object includes an identifier corresponding to an image displayed on the computing device as part of a content site, the image viewed by a user of the computing device;
receive a request from the computing device to take a survey, the request received in association with the user visiting a second content site;
retrieve the identifier from the data object on the computing device;
locate in a database, using the identifier, data describing the content of the image;
transmit a survey to the computing device, wherein the survey is a set of questions related to an attribute of the user of the computing device;
receive a set of answers corresponding to the set of questions, wherein the user provided the set of answers;
store, in a database, the set of answers associated with a user identifier and classifying the user as a viewer of the image, wherein the identifier corresponds to the user; and
generate a report for the image based on a collection of answers, wherein the collection of answers includes answers from one or more users classified as a viewer of the image.

7. The system of claim 6, wherein:
the data object on the computing device includes a user identifier; and
further instruction to locate, in a database, using the user identifier, user data, wherein the user data includes demographic information and sets of answers from surveys.

8. The system of claim 6, wherein:
the data object on the computing device includes an identification of the content site.

9. The system of claim 6, wherein the set of questions further includes questions related to the content site.

10. The system of claim 6, wherein the set of questions further includes questions related to personal interests of the user.

11. At least one computer readable medium including instructions for audience attribute identification that when executed by at least one processor, cause the at least one processor to:
transmit a data object to a computing device over a network to be stored on the computing device, wherein the data object includes an identifier corresponding to an image displayed on the computing device as part of a content site, the image viewed by a user of the computing device;
receive a request from the computing device to take a survey, the request received in association with the user visiting a second content site;
retrieve the identifier from the data object on the computing device;
locate in a database, using the identifier, data describing the content of the image;
transmit a survey to the computing device, wherein the survey is a set of questions related to an attribute of the user of the computing device;
receive a set of answers corresponding to the set of questions, wherein the user provided the set of answers;
store, in a database, the set of answers associated with a user identifier and classifying the user as a viewer of the image, wherein the identifier corresponds to the user; and
generate a report for the image based on a collection of answers, wherein the collection of answers includes answers from one or more users classified as a viewer of the image.

12. The at least one computer readable medium of claim 11, wherein:
the data object on the computing device includes a user identifier; and
further instruction to locate, in a database, using the user identifier, user data, wherein the user data includes demographic information and sets of answers from surveys.

13. The at least one computer readable medium of claim 11, wherein:
the data object on the computing device includes an identification of the content site.

14. The at least one computer readable medium of claim 11, wherein the set of questions further includes questions related to the content site.

15. The at least one computer readable medium of claim 11, wherein the set of questions further includes questions related to personal interests of the user.
